# EUROPÄISCHE PATENTSCHRIFT

(11) **EP 1 606 591 B1**
(45) Veröffentlichungstag und Bekanntmachung des Hinweises auf die Patenterteilung: **15.07.2020**
(21) Anmeldenummer: 04721486.1
(22) Anmeldetag: 18.03.2004
(51) Int. Cl.: G01F 1/84, G01N 9/00

(54) **MESSAUFNEHMER VOM VIBRATIONSTYP**
VIBRATING TYPE MEASURING DEVICE
CAPTEUR DE MESURE DU TYPE VIBRANT

(30) Priorität: 21.03.2003 DE 10312796
(43) Veröffentlichungstag der Anmeldung: 21.12.2005
(73) Patentinhaber: Endress + Hauser Flowtec AG, 4153 Reinach BL 1 (CH)
(72) Erfinder: BITTO, Ennio, 4147 Aesch (CH); ECKERT, Gerhard, 79618 Rheinfelden (DE)
(74) Vertreter: Andres, Angelika Maria
(86) Internationale Anmeldenummer: PCT/EP2004/002792
(87) Internationale Veröffentlichungsnummer: WO 2004/083785

(56) Entgegenhaltungen:
- EP-A- 0 553 939
- WO-A-02/088641
- US-A- 2 982 888

## Beschreibung

Die Erfindung betrifft eine Magnetkreisanordnung, die für eine Verwendung in einem Meßaufnehmer vom Vibrations-Typ, insb. einem Coriolis-Massedurchflußaufnehmer, geeignet ist.

Zur Ermittlung eines Massedurchflusses eines in einer Rohrleitung strömenden Fluids, insb. einer Flüssigkeit, werden oftmals Coriolis-Massedurchflußmesser verwendet, die bekanntlich mittels eines entsprechenden Meßaufnehmers vom Vibrations-Typ, angetrieben von einer daran angeschlossenen Steuer- und Auswerteelektronik, im Fluid Corioliskräfte bewirken und von diesen abgeleitet ein den Massedurchfluß repräsentierendes Meßsignal erzeugen.

Solche Coriolis-Massedurchflußmesser sind seit langem bekannt und im industriellen Einsatz. So sind z.B. in der EP-A 1 154 243, der US-A 48 76 898, der US-A 48 01 897, der US-A 50 48 350, der US-A 53 01 557, der US-A 53 94 758, der US-A 55 49 009, der US-A 57 96 011 oder der WO-A 02/099363 Coriolis-Massedurchflußmesser mit jeweils einem Meßaufnehmer beschrieben, der umfaßt:
- eine Doppelrohranordnung mit
   -- einem im Betrieb vibrierenden ersten Aufnehmerrohr und
   -- einem im Betrieb vibrierenden zweiten Aufnehmerrohr,
   -- wobei die vibrierenden Aufnehmerrohre zueinander im wesentlichen gegenphasig schwingen und
   -- wobei zumindest eines der beiden Aufnehmerrohre mit der Rohrleitung kommuniziert,
- einen Schwingungserreger zum Antreiben der Aufnehmerrohre sowie
- Schwingungssensoren zum Erfassen einlaßseitiger und auslaßseitiger Schwingungen der Aufnehmerrohre und zum Erzeugen wenigstens eines vom Massedurchfluß beeinflußten elektrischen Sensorsignals,
- wobei der Schwingungserreger und/oder die Schwingungssensoren wenigstens eine Magnetkreisanordnung zum Wandeln elektrischer in mechanische Energie und/oder umgekehrt aufweisen,
- wobei die wenigstens eine Magnetkreisanordnung
   -- wenigstens eine am ersten vibrierenden Aufnehmerrohr des Meßaufnehmers fixierte, zumindest zeitweise von einem Strom durchflossene und zumindest zeitweise von einem Magnetfeld durchsetzte Spule, die mittels wenigstens eines Paars elektrischer Leitungen mit einer Meßgerät-Elektronik des Coriolis-Massedurchflußmessers verbunden ist, sowie
   -- einen am zweiten vibrierenden Aufnehmerrohr des Meßaufnehmers fixierten, mit der wenigstens eine Spule zusammenwirkenden Anker umfaßt.

Die beiden Aufnehmerrohre sind, wie bei derartigen Meßaufnehmern üblich, mittels eines einlaßseitigen und eines auslaßseitigen Verteilerstücks und/oder mittels einer einlaßseitigen und einer auslaßseitigen Knotenplatte miteinander mechanisch verbundenen.

Gebogene oder gerade Aufnehmerrohre solcher Meßaufnehmer können bekanntlich, im sogenannten Nutzmode zu Biegeschwingungen gemäß einer ersten Eigenschwingungsform angeregt, im hindurchströmenden Fluid Corioliskräfte bewirken. Diese wiederum führen dann dazu, daß den angeregten Biegeschwingungen des Nutzmodes Biegeschwingungen in einem sogenannten Coriolismode überlagert werden und dementsprechend die mittels der Schwingungssensoren einlaßseitig und auslaßseitig erfaßten Schwingungen eine auch vom Massedurchfluß abhängige, meßbare Phasendifferenz aufweisen.

Üblicherweise werden die Aufnehmerrohre im Betrieb so auf einer momentanen Resonanzfrequenz, insb. bei konstantgeregelter Schwingungsamplitude, angeregt, daß sie im wesentlichen senkrecht zu einer im wesentlichen durch die beiden Aufnehmerohre bestimmte Längsschwerelinie der Doppelrohranordnung schwingen. Da die Resonanzfrequenzen der Aufnehmerrohre u.a. auch von der momentanen Dichte des Fluids abhängig sind, kann mittels marktüblicher Coriolis-Massedurchflußmesser neben dem Massedurchfluß auch die Dichte von strömenden Fluiden gemessen werden.

Bei Magnetkreisanordnungen der oben erwähnten Meßaufnehmer sind sowohl der Anker als auch die zugehörige Spule jeweils direkt an der Doppelrohranordnung fixiert, so daß beide im Betrieb, den Bewegungen der zugehörigen Aufnehmerrohre folgen. Dies wiederum führt dazu, daß die Spule wiederholt relativ zu einer nächsten Fixierstelle bewegt wird, an der die mit der Spule verbundenen elektrischen Leitungen am Meßaufnehmer abgefangen werden.

Zur Vermeidung von damit einhergehenden mechanischen Überbelastungen der Zuleitung, z.B. aufgrund von wiederholt hervorgerufenen oder permanent wechselnden Biegebeanspruchungen, sind bereits schon länger entsprechend geeignete Maßnahmen für Verlegung der Zuleitungen in marktüblichen Meßaufnehmern verwirklicht oder in der Fachwelt diskutiert worden.

So werden zur Minimierung der Amplituden von Schwingbewegungen solcher elektrischen Leitungen letztere üblicherweise direkt am Aufnehmerrohr gehaltert, an dem die Spule fixiert ist, und entlang desselben bis zu einer Einspannstelle geführt, an der das vibrierende Aufnehmerrohr betriebsgemäß keine Schwingungsbewegung mehr ausführt. Bei Doppelrohranordnungen mit zwei vom Fluid durchströmten Aufnehmerrohren kann das Abfangen der Zuleitung z.B. in der Nähe der erwähnten Verteilerstücken erfolgen, mittels denen bekanntlich die Fluidströmung auf die beiden angeschlossenen Aufnehmerrohre aufgeteilt bzw. anschließend wieder zusammengeführt wird. Abgesehen davon, daß durch die Verlegung der Leitungen direkt auf dem Aufnehemerrohr dessen Schwingeigenschaften beeinflußt werden können, ist das Verlegen solcher Leitung bei Verwendung des Meßaufnehmers zum Messen von Fluiden im Hochtemperaturbereich praktisch nicht mehr möglich.

Eine weitere, auch bei diesem, insb. in Hochtemperaturanwendungen auftretenden, Problem abhelfende Möglichkeit zur Vermeidung von mechanischen Überbelastungen der Zuleitung, insb. bei für Fluide von hoher Temperatur geeigneten Meßaufnehmern, ist z.B. in der US-A 47 38 143 oder US-A 48 76 898 beschrieben. Bei den hier gezeigten Meßaufnehmern, die beispielsweise auch in Temperaturbereichen oberhalb von 400°C einsetzbar sind, werden die Schwingbewegungen der elektrischen Leitungen innerhalb einer vergleichsweise kurzen Leitungsstrecke jeweils mittels eines biegeelastischen und elektrisch leitenden Federelements abgebaut, das in den Verlauf der Zuleitung eingesetzt ist. Das jeweilige Federelement ist dazu mit einem ersten Ende sowohl mechanisch als auch elektrisch an die Spule gekoppelt und mit seinem zweiten Ende einem den Meßaufnehmer einhausenden Gehäuse oder einem am Gehäuse fixierten Tragrahmen elektrisch isoliert verbunden. Ausgehend von dem hier als Fixierstelle für die Zuleitung dienden zweiten Ende des Federelements wird die Zuleitung, von den Schwingbewegungen der Spule praktisch vollständig entkoppelt, in geeigneter Weise weitergeführt, beispielsweise als Stromschiene und/oder isolierter Draht.

Aufgrund der betriebsbedingt ständigen Biegebeanspruchung bei zumeist hohen Temperaturen müssen die Federelemente eine vergleichsweise hohe, weitgehend von der Temperatur unabhängige Elastizität aufweisen bei zugleich sehr hoher Alterungsbeständigkeit. Als Material für die Federelemente werden Nickel-Legierungen vorgeschlagen. Zum einen müssen die Federelemente nämlich über einen langen Zeitraum mechanisch stabil sein. Zum anderen aber dürfen die Federelemente nicht allzu biegesteif sein, da sonst eine Beeinflussung der Biegeschwingungen der Aufnehmerrohre und damit auch der Empfindlichkeit des Meßaufnehmers auf die zu erfassende Meßgröße in einem unerwünscht hohen Maße möglich ist. Um all diesen Anforderungen sämtlich zumindest annährend genügen zu können, insb. auch um die geforderter Zuverlässigkeit zu erreichen, sind die Federelemente vergleichsweise aufwendig zu fertigen bzw. auch mit sehr hohem technischen Aufwand an die Aufnehmerrohre und, wie zuvor erwähnt, an das Aufnehmer-Gehäuse oder dergleichen zu montieren.

Eine andere Möglichkeit zur Vermeidung von Überbelastungen der Zuleitungen ist beispielsweise in der US-A 53 59 872 oder der WO-A 02/088641 vorgeschlagen. Bei den dort gezeigten Meßaufnehmern sind die für die Magnetkreisanordnung vorgesehenen Spulen mittels einer an den Aufnehmerrohren der jeweiligen Doppelrohranordnung fixierten, biegeelastischen Halterung derart im Meßaufnehmer befestigt, daß die Spulen trotz vibrierenden Aufnehmerrohren in ihrer statische Ruhelage verharren. Dementsprechend sind auch die Zuleitungen im Betrieb des Meßaufnehmers, wenn überhaupt, nur in einem vernachlässigbar geringen Maße schwingungsbedingten Biegebeanspruchungen ausgesetzt. Es hat sich bei dieser Art von Magentkreisanordnung jedoch gezeigt, daß insb. die damit erzeugten Sensorsignale erheblich gestört sein können, was einerseits durch die Art der Führung des Magnetfeldes bedingt sein kann, zum anderen aber auch auf parasitäre Vibrationen der Magnetkreisanordnung selbst zurückgeführt werden kann.

Eine Aufgabe der Erfindung besteht daher darin, die Art der Halterung und Verlegung von Leitungen für Magnetkreisanordnungen eines, insb. auch auch für Fluide von hoher Temperatur verwendbaren, Meßaufnehmers der beschriebenen Art dahingehend zu verbessern, daß die Zuleitungen eine hohe Lebensdauer bei gleichzeitig hoher zulässiger Schwingspielzahl aufweisen, und daß die Halterung selbst bei vergleichsweise einfachem Aufbau mechanisch robust ist, ohne dabei die Empfindlichkeit des Meßaufnehmers auf die Meßgröße nennenswert zu verschlechtern.

Zur Lösung der Aufgabe besteht die Erfindung in einem Meßaufnehmer gemäß Anspruch 1. Der Meßaufnehmer weist eine Halterung für dem Meßaufnehmer zugeführte elektrische Leitungen und/oder für am Meßaufnehmer vorgesehene Spulen, welche Halterung
- wenigstens einen an einem ersten Aufnehmerrohr eines Meßaufnehmers fixierten federelastischen ersten Schenkel und
- wenigstens einen an einem zweiten Aufnehmerrohr des Meßaufnehmers fixierten federelastischen zweiten Schenkel umfaßt,
- wobei die beiden Aufnehmerrohre im Betrieb des Meßaufnehmers zu mechanischen Schwingungen in einem Nutzmode so angeregt sind, daß sie im wesentlichen zueinander gegenphasig schwingen,
- wobei die beiden Schenkel der Halterung an einer von den beiden Aufnehmerrohren entfernten Verbindungsstelle im wesentlichen starr miteinander verbunden sind, und
- wobei die Halterung einen ersten Eigenmode mit einer mechanischen Resonanzfrequenz, die, insb. um 10% oder mehr, niedriger ist, als eine niedrigste mechanische Resonanzfrequenz der im Nutzmode schwingenden Aufnehmerrohre, sowie einen zweiten Eigenmode von vorgebbarer mechanischer Resonanzfrequenz, bei dem der am ersten Aufnehmerrohr fixierte erste Schenkel und der am zweiten Aufnehmerrohr fixierte zweite Schenkel im wesentlichen parallel zur Mittelebene der Dopplelrohranordnung pendeln, aufweist
- und wobei die Resonanzfrequenz des ersten Eigenmodes von der Resonanzfrequenz des zweiten Eigenmodes verschieden ist.

Nach einer ersten Ausgestaltung der Erfindung bestehen zumindest die Schenkel der Halterung aus einem Material, das einen linearen Wärmeausdehnungskoeffizienten von kleiner als 17·10⁻⁶/K aufweist.

Nach einer zweiten Ausgestaltung der Erfindung umfaßt die Halterung weiters einen am ersten Aufnehmerrohr fixierten federelastischen dritten Schenkel und wenigstens einen am zweiten Aufnehmerrohr fixierten federelastischen vierten Schenkel.

Nach einer dritten Ausgestaltung der Erfindung wird der Meßaufnehmer als ein Massedurchflußaufnehmer für ein in einer angeschlossenen Rohrleitung strömendes Fluid verwendet, wobei das zu messende Fluid im Betrieb des Meßaufnehmers durch wenigstens eines der beiden Aufnehmerrohre strömen gelassen wird.

Nach einer vierten Ausgestaltung der Erfindung wird der Meßaufnehmer als ein Dichte- und/oder Viskositätsaufnehmer für ein in einer angeschlossenen Rohrleitung strömendes Fluid verwendet, wobei das zu messende Fluid im Betrieb des Meßaufnehmers durch wenigstens eines der beiden Aufnehmerrohre strömen gelassen wird.

Nach einer bevorzugten fünften Ausgestaltung der Erfindung ist die Resonanzfrequenz des ersten Eigenmodes größer als 50 Hz gewählt.

Nach einer bevorzugten sechsten Ausgestaltung der Erfindung ist die Resonanzfrequenz des ersten Eigenmodes niedriger als die Resonanzfrequenz des zweiten Eigenmodes eingestellt.

Nach einer siebten Ausgestaltung der Erfindung wird der Meßaufnehmer als ein Viskositätsaufnehmer für ein in einer angeschlossenen Rohrleitung strömendes Fluid verwendet, wobei das zu messende Fluid im Betrieb des Meßaufnehmers durch wenigstens eines der beiden Aufnehmerrohre strömen gelassen wird.

Ein Grundgedanke der Erfindung besteht darin, einerseits wenigstens eine der bei derartigen Meßaufnehmern, insb. in Coriolis-Massedurchflußaufnehmern oder auch Coriolis-Massedurchfluß/Dichteaufnehmern, üblicherweise verwendeten Magnetkreisanordnungen, also den Schwingungserreger und/oder die Schwingungssensoren, so zu gestalten, daß die zugeführten elektrischen Leitungen auch im Betrieb nur vergleichsweise geringen mechanischen Belastungen ausgesetzt sind. Andererseits zielt die Erfindung darauf ab, eine gegenüber Temperatureinflüssen weitgehend unempfindliche Magnetkreisanordnung zu schaffen, bei der die zugeführten Leitungen und ggf. auch nah am hochtemperierten Aufnehmerrohr angeordnete Spulen weitgehend temperaturbeständig sind. Darüber hinaus besteht ein weiterer Grundgedanke der Erfindung darin, die Magnetkreisanordnung mechanisch so zu auszubilden, daß allfäige Schwingungsbewegungen derselben keinen oder nur einen sehr geringen Einfluß auf die mittels des Meßaufnehmer erzeugten Meßsignale haben.

Die erfindungsgemäße Halterung ist besonders geeignet für die Verwendung in den elektro-mechanischen Schwingungserregern oder elektrodynamischen Schwingungssensoren, die üblicherweise direkt an den betriebsgemäß vibrierenden Aufnehmerrohren eines Messaufnehmers vom Vibrationstyp angeordnet sind.

Nachfolgend werden die Erfindung und weitere Vorteile anhand von Ausführungsbeispielen erläutert, die in den Figuren der Zeichnung dargestellt sind. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.
- Fig. 1: zeigt perspektivisch einen Meßaufnehmer vom Vibrationstyp mit einer Doppelrohranordnung,
- Fig. 2a: zeigt perspektivisch eine erste Variante einer, insb. für einen Meßaufnehmer gemäß Fig. 1 geeigneten, Magnetkreisanordnung, die mittels einer Halterung an einer Doppelrohranordnung gemäß Fig. 1 fixiert ist,
- Fig. 2b: zeigt die Magnetkreisanordnung gemäß Fig. 2a in einer Seitenansicht,
- Fig. 3: zeigt perspektivisch eine zweite Variante einer, insb. für einen Meßaufnehmer gemäß Fig. 1 geeigneten, Magnetkreisanordnung,
- Fig. 4a: zeigt perspektivisch eine dritte Variante einer, insb. für einen Meßaufnehmer gemäß Fig. 1 geeigneten, Magnetkreisanordnung,
- Fig. 4b: zeigt perspektivisch eine vorteilhafte Weiterbildung der Magnetkreisanordnung von Fig. 4a,
- Fig. 5: zeigt beispielhaft in schematischen Diagrammdarstellung ein Auswahl von mechanischen Resonanzfrequenzen, die am Meßaufnehmer gemäß Fig. 1 messbar sind,
- Fig. 6a: zeigt perspektivisch einen Teil einer für einen Meßaufnehmer gemäß Fig. 1 verwenbaren Spule und
- Fig. 6b: zeigt in einer geschnitten Seitenansicht einen Teil der Spule gemäß Fig. 6a.

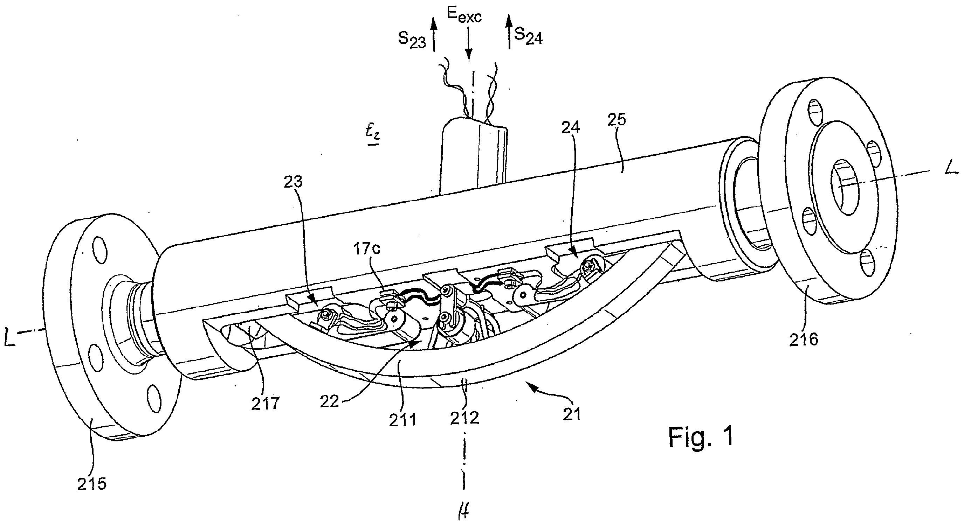

In Fig. 1 ist ein Ausführungsbeispiel eines Meßaufnehmers vom Vibrationstyp, insb. einem Coriolis-Massedurchflußaufnehmer, einem Coriolis-Massedurchfluß-/Dichteaufnehmer oder auch in einem Viskositäts-/ Dichteaufnehmer oder dergleichen, gezeigt, der beispielsweise zum Messen eines Massedurchfluß, einer Dichte und/oder einer Viskosität eines in einer - hier nicht dargestellten - Rohrleitung strömenden Fluids verwendet werden kann. Ein solcher Meßaufnehmer dient, als physikalisch-elektrischer Meßwandler in einem entsprechenden Meßgerät verwendet, bekanntlich dazu, im hindurchströmenden Fluid Corioliskräfte, Trägheitskräfte und/oder Reibungskräfte zu erzeugen sowie die aus diesen Kräften resultierenden Reaktionen sensorisch zu erfassen und in elektronisch auswertbare Meßsignale umzuwandeln.

Zum Führen des zu messenden Fluids umfaßt der Meßaufnehmer eine mittels eines ersten Aufnehmerrohrs 211 und mittels eines, insb. zum ersten Aufnehmerrohr 211 identisch geformten, zweiten Aufnehmerrohrs 212 gebildete Doppelrohranordnung 21. Die Aufnehmerrohre 211, 212 können, wie bei derartigen Meßaufnehmern üblich, einfach, z.B. U-förmig oder V-förmig, oder aber auch schleifenförmig gekrümmt sein; falls, erforderlich, können sie aber auch gerade sein. Wie in der Fig. 1 gezeigt, ist die Doppelrohranordnung 21 ferner mittels eines, hier zylindrischen, Tragrahmens 25 schwingfähig gehaltert.

Die Aufnehmerrohre 211, 212 sind vorzugsweise, wie auch in Fig. 1 dargestellt, zueinander so ausgerichtet, daß eine zwischen den beiden, insb. zueinander parallelen, Aufnehmerrohren 211, 212 imaginär verlaufende Mittelebene E₁ praktisch einer ersten Symmetrieebene der Doppelrohranordnung 21 entspricht. Darüber hinaus weist die Doppelrohranordnung 21 eine Längsschwerelinie auf, die in der zwischen den beiden, insb. zueinander parallelen, Aufnehmerrohren 211, 212 imaginär verlaufende Mittelebene E₁ liegt und im wesentlichen einer ersten Trägheitshauptachse der Doppelrohranordnung 21 entspricht. Ferner ist die Doppelrohranordnung 21 in vorteilhafter Weise so geformt, daß sie eine gedachte zweite Symmetrieebene E₂ aufweist, die die Mittelebene E₁, möglichst genau so schneidet, daß auch eine auf der oben genannten ersten Trägheitshauptachse senkrecht stehende zweite Trägheitshauptachse H der Doppelrohranordnung 21 in dieser zweiten Symmetrieebene E₂ liegt.

Für den Fall, daß beide Aufnehmerrohre 211, 212 im Betrieb vom zu messenden Fluid durchströmt werden sollen, sind in der dem Fachmann bekannten Weise einlaßseitig und auslaßseitig jeweils ein entsprechendes Verteilerstück vorgesehen, worin die beiden Aufnehmerrohre 211, 212 jeweils münden. Die hier nicht dargestellten Verteilerstücke sind bei eingebautem Meßgerät jeweils mit einem geraden einlaßseitigen bzw. auslaßseitigen Abschnitt der Fluid führenden Rohrleitung verbunden und daher, wie bei solchen Meßaufnehmern üblich, bevorzugt zueinander und zu einer die beiden Verteilerstücke imaginär verbindenden Längsachse L der Doppelrohranordnung 21 fluchtend ausgerichtet. In vorteilhafter Weise können die beiden Verteilerstücke in die entsprechenden Stirnseiten des Tragrahmens 25 eingesetzt oder aber auch darin intergriert sein. Falls der Meßaufnehmer lösbar in die Rohrleitung zu montieren ist, sind ferner ein dem einlaßseitigen Verteilerstück angeformter einlaßseitiger erster Flansch 215 und ein dem auslaßseitigen Verteilerstück angeformter auslaßseitiger zweiter Flansch 216 vorgesehen; falls erforderlich können die Verteilerstücke aber auch direkt mit der Rohrleitung z.B. mittels Schweißung oder Hartlötung, verbunden werden.

Für den anderen Fall, daß nur eines der beiden Aufnehmerrohre 211, 212 im Betrieb vom Fluid durchströmt ist, können die beiden Flansche 215, 216, wie beispielsweise in der US-A 55 49 009 oder der WO-A 02/099363 gezeigt, mittels eines einlaßseitig und entsprechend auslaßseitig vorgesehenen Einlaß- bzw. Auslaßrohrverbindungsstück mit dem einen der beiden Aufnehmerrohre 211, 212 gekoppelt sein.

Im Betrieb des Meßaufnehmers werden die Aufnehmerrohre 211, 212, wie bereits erwähnt, im Nutzmode zu Biegeschwingungen, insb. auf einer natürlichen Resonanzfrequenz eines Eigenmodes der Aufnehmerrohre 211, 212, angeregt, und zwar so, daß, wie bei derartigen Meßaufnehmern üblich, das Aufnehmerrohr 211 gegenphasig zum Aufnehmerrohr 212 vibriert. Die somit im hindurchströmenden Fluid induzierten Corioliskräfte bewirken bekanntlich, auch als Coriolismode bezeichnete, zusätzliche mechanische Schwingungen, die vom zu messenden Massedurchfluß m abhängig und den angeregten Schwingungen des Nutzmodes so überlagert sind, daß die Aufnehmerrohre 211, 212 asymmetrisch elastisch verformt werden.

Falls erforderlich, können allfällige, von den vibrierenden Aufnehmerrohren 211, 212 einlaßseitig oder auslaßseitig in den Verteilerstücken verursachte mechanische Spannungen z.B. dadurch minimiert werden, daß die Aufnehmerrohre 211, 212, wie bei derartigen Aufnehmern üblich, einlaßseitig mittels wenigstens einer ersten Knotenplatte 217 und auslaßseitig mittels wenigstens einer zweiten Knotenplatte - hier nicht gezeigten - miteinander mechanisch verbunden sind. Darüber hinaus können mittels der Knotenplatten mechanische Resonanzfrequenzen der Doppelrohranordnung 21 gezielt beeinflußt werden.

Zum Antreiben der Aufnehmerrohre 211, 212 umfaßt der Meßaufnehmer mindestens einen Schwingungserreger 22. Dieser dient dazu, eine elektrische Erregerenergie *E_{exc},* die von einer an den Meßaufnehmer angeschlossenen, hier nichtdargestellten Meßgerät-Elektronik eingespeist ist, in solche, z.B. pulsierenden oder harmonischen, Erregerkräfte *F_{exc}* umzuwandeln, die symmetrisch, also gleichzeitig und gleichmäßig, jedoch gegensinnig, auf Aufnehmerrohr 211 und 212 einwirken und somit die zueinander gegenphasigen Schwingungen der Aufnehmerrohre 211, 212 erzeugen. Die Erregerkräfte *F_{exc}* können in der dem Fachmann bekannten Weise z.B. mittels einer in der Meßgerät-Elektronik vorgesehenen Strom-und/oder Spannungs-Regelschaltung, hinsichtlich ihrer Amplitude und, z.B. mittels einer entsprechd vorgesehenen Phasen-Regelschleife, hinsichtlich ihrer Frequenz eingestellt werden, vgl. hierzu auch die US-A 48 01 897.

Zum Erfassen von Schwingungen der vibrierenden Aufnehmerrohre 211, 212 weist der Meßaufnehmer ferner einen einlaßßseitigen ersten Schwingungssensor 23 und einen auslaßseitigen zweiten Schwingungssensor 24 auf, welche beiden Schwingungssensoren 23, 24 auf Bewegungen der Aufnehmerrohre 211, 212, insb. deren laterale Auslenkungen, reagierend, ein entsprechendes erstes bzw. zweites Schwingungssignal S₂₃, S₂₄ an die Meßgerät-Elektronik liefern.

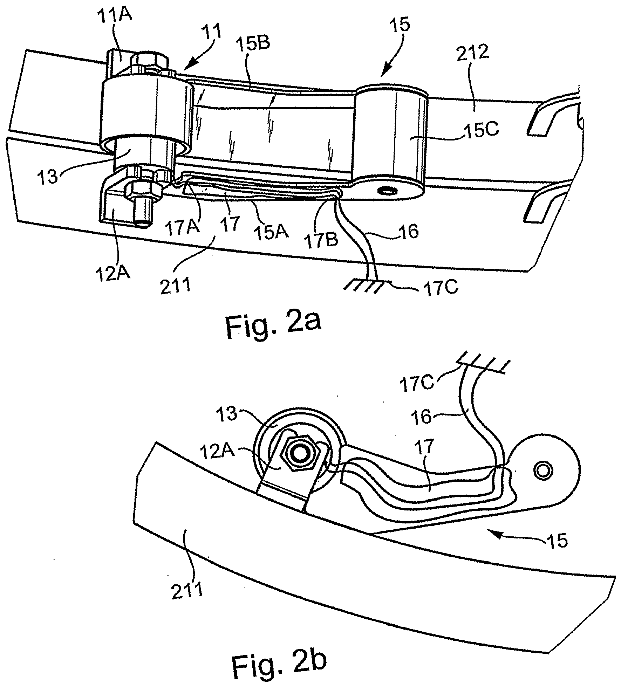

In den Fig. 2a bis 4 sind Ausführungsbeispiele einer für die Verwendung im vorbeschriebenen Meßaufnehmer geeigneten Magnetkreisanordnung zum Wandeln elektrischer in mechanische Energie und/oder, basierend auf dem Induktionsgesetz, zum Wandeln mechanischer in elektrische Energie dargestellt, wobei die erfindungsgemäße Magnetkreisanordnung, einerseits als mechanische Schwingungen erfassender Schwingungssensoren 23, 24 und andererseits als mechanische Schwingungen erzeugender Schwingungserreger 22 verwendet werden kann.

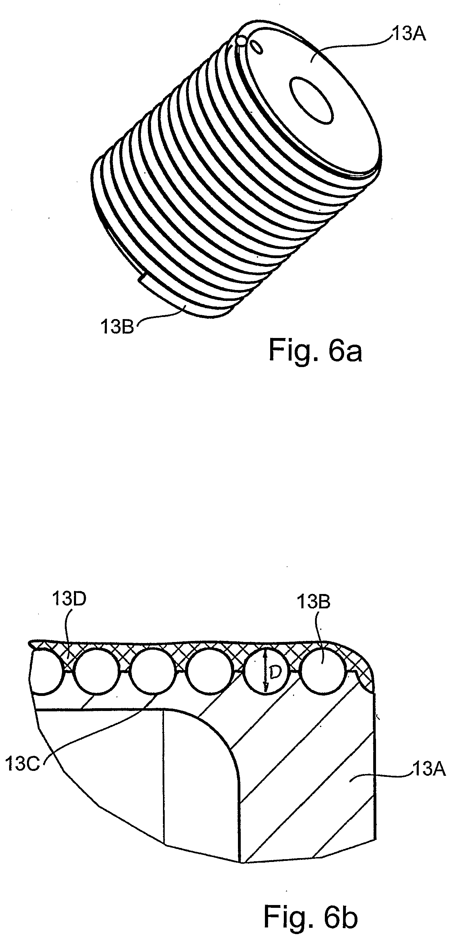

Zum Umwandeln mechanischer in elektrische Energie oder *vice versa* weist die Magnetkreisanordnung wenigstens eine im Betrieb von einem Strom durchflossene, bevorzugt zylindrische, Spule 13 auf, die mittels wenigstens eines Paars elektrischer Leitungen 16 mit der Meßgerät-Elektronik des Meßaufnehmers elektrisch verbunden ist. Die Spule 13 umfaßt, wie in Fig. 6a schematisch dargestellt, einen elektrisch nicht leitenden, insb. zylindrischen, Spulenkörper 13A, auf den wenigstens ein mittels des wenigstens einen Paars elektrischer Leitungen 16 mit der Meßgerät-Elektronik elektrisch verbunder Spulendraht 13B gewickelt ist. Nach einer Ausgestaltung der Erfindung besteht der Spulenkörper 13A aus, insb. hochtemperaturfestem, keramischem und/oder glasartigem Material. Nach einer weiteren Ausgestaltung der Erfindung besteht der Spulendraht 13B aus einem Edel-Metall, beispielsweise einer Gold-, Silber- und/oder Platin-Legierung oder dergleichen.

Des weiteren umfaßt die Magnetkreisanordnung wenigstens einen am Aufnehmerrohr 211 fixierten, im Betrieb mit der stromdurchflossenen Spule 13 über ein Magnetfeld in Wechselwirkung stehenden Anker 11. Vorzugsweise besteht der Anker 11 zumindest anteilig aus einem hartmagnetischen, also vormagnetisierbaren, Material, wie z.B. AINiCo, NyFeB, SmCo oder einer anderen Seltene-Erde-Legierung. Ferner kann als Material für den Anker 11 aber auch erheblich kostengünstigerer Automatenstahl oder Baustahl verwendet werden. Wie in Fig. 2a gezeigt, ist der Anker 11 mittels eines biegesteifen am Aufnehmerrohr 211 fixierten ersten Winkelstücks 11A an der Doppelrohranordnung 21 montiert. Das Winkelstück 11A kann mit dem Aufnehmerrohr 211 z.B. verschweißt oder hartverlötet sein.

Die Magnetkreisanordnung ist vorzugsweise vom elektrodynamischen Typ, also eine solche Magnetkreisanordnung, bei der ein zu einer Leiterschleife geformter elektrischer Leiter, z.B. die Spule 13, von einem mittels wenigstens einem Dauermagneten, hier dem Anker 11, erzeugten Magnetfeld, insb. senkrecht, durchsetzt ist und bei der Leiterschleife und Dauermagnet relativ zueinander bewegt werden. Die Magnetkreisanordnung kann aber auch vom elektromagnetischen Typ, also eine solche Magnetkreisanordnung sein, bei der zwei relativ zueinander bewegliche ferromagnetische Körper so zueinander angeordnet sind, daß wenigstens ein zwischen den beiden gebildeter, veränderlicher Luftspalt, von einem, insb. homogenisierten, Magnetfeld hoher Flußdichte durchsetzt ist, vgl. hierzu insb. auch die EP-A 803 713.

Zum Homogenisieren der mit der Magnetkreisanordnung erzeugten Magnetfelder und zum Einstellen einer, insb. auch außerhalb des Ankers 11, möglichst hohen Flußdichte kan der Anker 11 beispielsweise inform eines Bechers ausgeführt sein, dessen Becherboden ein zur Becherwand koaxial ausgerichteter, insb. auch hartmagnetischer, Stab angeformt ist. Darüber hinaus kann der Anker 11, wie bei derartigen Magnetkreisanordnungen üblich, zumindest anteilig, beispielsweise im Bereich der zuvor erwähnten Becherwand, aus weichmagnetischen Werkstoffen, wie Ferrit, Corovac oder dergleichen, gefertigt sein. Darüber hinaus kann auch die Spule 13 zum Zwecke der Führung der Magnetfelder in einem, insb. koaxial zur Spule 13 ausgerichteten, Spulenbecher untergebracht sein.

Neben der wenigstens einen Spule 13 und dem wenigstens eine Anker 11 umfaßt die Magnetkreisanordnung weiters ein Halterung 15, die dazu dient, dem Meßaufnehmer, insb. der Magnetkreisanordnung selbst, zugeführte elektrische Leitungen und/oder die wenigstens eine Spule 13 mit der Doppelrohranordnung 21 mechanisch zu verbinden.

Wie in den Fig. 2a, 2b gezeigt, ist die Halterung 15 dazu mit einem ersten Schenkel 15A am ersten Aufnehmerrohr 211 und mit einem im wesentlichen identisch oder aber auch spiegelsymmetrisch geformten zweiten Schenkel 15B am zweiten Aufnehmerrohr 212 fixiert. Des weiteren sind die beiden, insb. federelastischen, Schenkel 15A, 15B über ein, beispielsweise stab- oder plattenförmiges, Verbindungselement 15C am der Doppelrohranordnung 21 jeweils abgewandten Ende, bevorzugt starr, miteinander so verbunden, daß eine so gebildete Verbindungsstelle der beiden Schenkel 15A, 15B sowohl von den Aufnehmerrohren 211, 212 als auch vom Tragrahmen 25 beabstandet ist.

Für den Fall, daß die Aufnehmerrohre 211, 212 in der oben beschriebenen Weise zueinander gegenphasig vibrieren, wird die Halterung 15, insb. durch Ausbiegen der an den Aufnehmerrohren 211, 212 befestigten Schenkel 15A, 15B, zwar verformt, ihre Symmetrieachse behält jedoch ihre Lage bezüglich der Mittelebene E₁ im wesentlichen bei. Somit verbleibt auch das via Schenkel 15A, 15B an der Doppelrohranordnung 21 befestigte Verbindungselement 15C relativ zur Mittelebene E₁ stets in einer im wesentlichen konstanten Ruhelage.

Nach einer ersten Variante der Erfindung ist die Spule 13 am Aufnehmerrohr 212 befestigt. Wie in den Fig. 2a oder 2b dargestellt, kann bei dieser ersten Variante der Erfindung die Spule 13 mittels eines am Aufnehmerrohr 212 starr fixierten, beispielsweise angeschweißten oder angelöteten zweiten Winkelstücks 12A an der Doppelrohranordnung 21 montierten sein. Bei dieser ersten Variante der Erfindung dient die Halterung 15 dazu, das der Magnetkreisanordnung zugeführte Paar elektrische Leitung 16 so zu fixieren, daß von der betriebsgemäß bewegten Spule 13 auf die Leitung übertragene Schwingungen auf einer vergleichsweise kurzen Leitungsstrecke nahezu vollständig abgebaut werden und dabei die mechanische Bruchfestigkeit der beiden Leitungen im wesentlichen erhalten bleibt bzw. von den einwirkenden mechanischen Kräften möglichst nicht überschritten wird.

Zu diesem Zweck ist das wenigstens eine mit der Spule 13 elektrisch verbundene Paar Leitungen 16 an einem der beiden Schenkel 15A, 15B, vorzugsweise dem der Spule 13 am nächsten liegenden Schenkel 15A, fixiert, und zwar so, daß die beiden Leitungen von einem am Schenkel 15A bzw. 15B, insb. nahe an der Spule 13 positionierten, ersten Fixierpunkt 17A entlang des Schenkels 15A bzw. 15B hin zu einem nahe zum oder am Verbindungselement 15C positionierten zweiten Fixierpunkt 17B geführt sind. In vorteilhafter Weise sind die beiden Leitungen darüber hinaus auch zwischen den beiden Fixierpunkten, insb. vollständig, am Schenkel 15A bzw. 15B fixiert.

Zur Pufferung allfälliger thermisch bedingter Ausdehnung der Halterung 15 sind die Leitungen nach einer Ausgestaltung der Erfindung in sich gekrümmt, insb. bogenförmig oder mäanderförmig, verlegt am Schenkel 15A bzw. 15B fixiert.

Die Befestigung der Leitungen kann in vorteilhafter Weise adhäsiv, beispielsweise unter Verwendung eines temperaturfesten Klebers oder eines Harzes, erfolgen. Die Leitungen können in vorteilhafter Weise auch dadurch an der Halterung 15 fixiert sein, daß sie, wie in den Fig. 2a, 2b schematisch dargestellt, in eine auf den Schenkel 15A bzw. 15B aufgetragene thermisch isolierende, insb. auch temperaturfeste und temperaturbeständige, Schicht 17 eingebettet sind. Diese führt dazu, daß zum einen auf sehr einfache Weise eine stabile, dauerhafte Fixierung der Leitungen 16 geschaffen werden kann. Zum anderen kann bei Verwendung eines auch elektrisch isolierenden Materials für die einbettende Schicht im Bereich der Halterung 15 ein auch vergleichsweise weniger beständiges Material für die Isolation der Leitung gewählt oder sogar blanker Draht für die Leitungen verwendet werden. Als isolierende Schicht 17 kann hier beispielsweise eine in entsprechender Weise aufgetragene Glas- oder eine Glaslotschicht, Keramikschicht oder Emailleschicht oder dergleichen dienen.

Ausgehend vom zweiten Fixierpunkt 17B sind die Leitungen in vorteilhafter Weise, insb. frei verlegt, einem am Tragrahmen 25 vorgesehenen dritten Fixierpunkt 17C zugeführt, an dem sie nochmals abgefangen sind, wobei unter Vernachlässigung allfälliger thermisch bedingter Längenänderungen ein Abstand zwischen diesen beiden Fixierpunkten auch bei in oben beschriebener Weise bewegter Spule 13 im wesentlichen konstant bleibt. Der dritte Fixierpunkt 17C kann, wie auch in Fig. 1 schematisch dargestellt, beispielsweise mittels eines am Tragrahmen 25 montierten Klemmblocks realisert sein.

Durch die Verlegung der Leitungen 16 in der beschriebenen Weise kann sichergestellt werden, daß jede dieser Leitungen einerseits vornehmlich innerhalb eines vorgegebenen Bereichs, nämlich zwischen dem ersten und dem zweiten Fixierpunkt 17B, bewegt und andererseits trotz einer dort dauerhaft anstehenden Wechselbelastung nicht in unzulässig hohen Maße Biegebeanspruchungen ausgesetzt ist.

Nach einer weiteren Ausgestaltung der Erfindung sind der Spulendraht 13B und das an diesen angeschlossene Paar elektrischer Leitungen 16 zumindest im Bereich der isolierenden Schicht 17 einstückig, also als eine einzige durchgehende Leitung, ausgebildet.

Die Halterung 15 kann sowohl einstückig, z.B. aus einem Stanz-Biegteil, oder mehrstückig hergestellt sein. Als Material für die Halterung 15 können z.B. dieselben Werkstoffe wie für die Aufnehmerrohre 211, 212 verwendet werden. Vorzugsweise ist für die Halterung 15, insb. bei Verwendung des Meßaufnehmers in Hochtemperaturbereichen mit Fluidtemperaturen von über 250 °C, jedoch ein Material zu verwenden, das einen linearen Wärmeausdehnungskoeffizienten von kleiner als 17 · 10⁻⁶ · K⁻¹ aufweist.

Um eine Beeinflussung der Schwingungsform der vibrierenden Aufnehmerrohre 211, 212 durch die Halterung 15 zu vermeiden, ist diese entsprechend biegeweich auszuführen. Dazu können z.B. die betriebsgemäß mitschwingenden Schenkel 15A, 15B aus entsprechend dünnen Blechstreifen gefertigt sein. Über dies ist das Verbindungselement 15C nach einer Ausgestaltung der Erfindung ausschließlich mittels der beiden Schenkel 15A, 15B innerhalb des Meßaufnehmers gehalten.

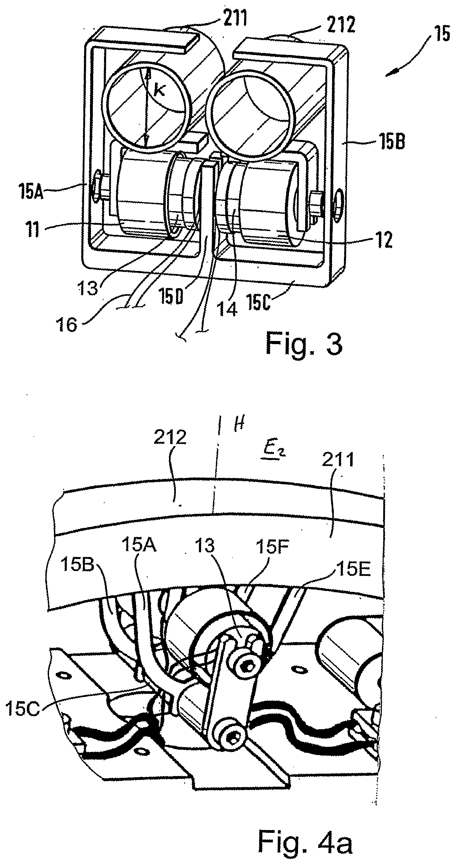

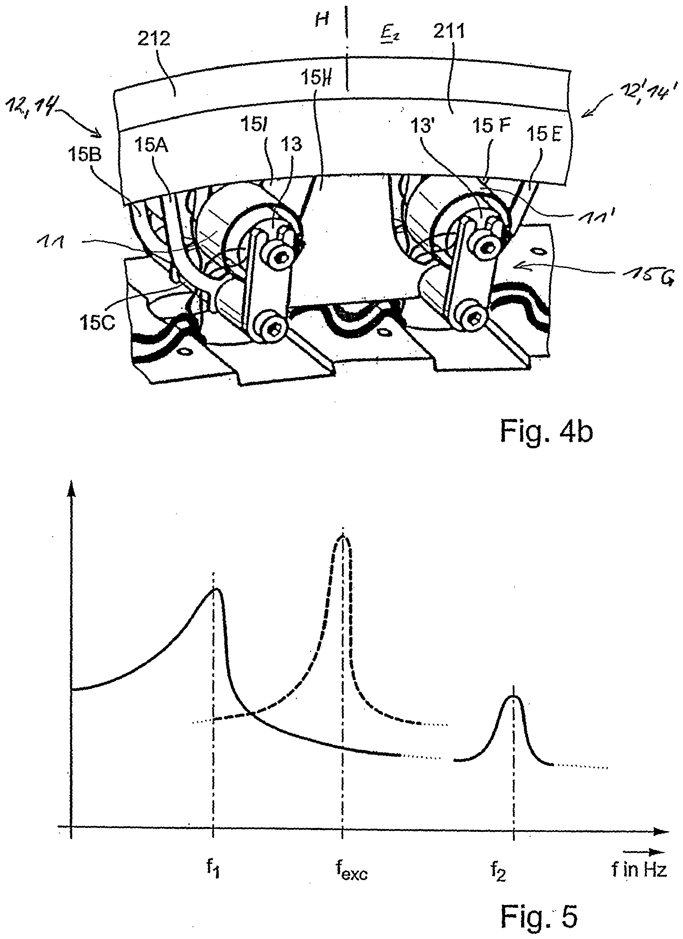

Nach einer zweiten Variante der Erfindung, wird die Halterung 15, wie beispielsweise auch in der US-A 53 59 872 oder der WO-A 02/088641 gezeigt, dazu verwendet, die für die Magnetkreisanordnung wenigstens eine vorgesehene Spule 13 an der Dopplerohranordnung 21 zu haltern. Bei dieser Variante der Erfindung kann die Magnetkreisanordnung, wie auch in Fig. 3 oder 4 gezeigt, weiters eine zweite Spule 14 umfassen, die mit einem dann am Aufnehmerrohr 212 fixierten zweiten Anker 12 entsprechend zusammenwirkt.

Weiterführende Untersuchungen haben hierbei ergeben, daß bei der Verwendung der Halterung 15, sowohl in der vorgenannten Weise zur Befestigung von für die Magnetkreisanordnung vorgesehenen Spulen an der Doppelrohranordnung 21 als auch in der weiter oben beschriebenen Weise zum Fixieren von elektrischen Leitungen hohe Anforderungen an die Präzision zu stellen sind, mit der die gesamte Magnetkreisanordnung gefertigt und schließlich auch an der Doppelrohranordnung 21 befestigt ist. Insbesondere ist hierbei dafür Sorge zu tragen, daß die eingangs erwähnten Symmetrieverhältnisse, insb. im Hinblick auf die erste und zweite Symmetrieebene E₁, E₂, möglichst genau eingehalten sind.

Zudem ist von den Erfindern auch erkannt worden, daß außer dem Erreichen eines möglichst hohen Maßes an Symmetrie beim Aufbau des Meßaufnehmers die Halterung 15 auch noch in ihrem mechanischen Schwingverhalten an selbiges der Doppelrohranordnung 21 anzupassen ist.

Die Halterung 15 selbst weist nämlich einen ersten Eigenmode mit einer vorgebbaren mechanischen Resonanzfrequenz f₁ auf, bei dem die beiden am Aufnehmerrohr 211 bzw. 212 fixierten Schenkel 15A, 15B im wesentlichen zueinander gleichphasig schwingen.

Bei diesem ersten Eigenmode werden die beiden Schenkel 15A, 15B jeweils nach Art eines Pendels um eine am zugehörigen Aufnehmerrohr 211 gebildete erste Fixierstelle bzw. um eine am zugehörigen Aufnehmerrohr 212 gebildete zweite Fixierstelle der Halterung 15 ausgelenkt, und zwar so, daß beide Schenkel 15A, 15B im wesentlichen senkrecht zur Mittelebene E₁ der Dopplerohranordnung 21 schwingen.

Darüber hinaus weist die Halterung noch einen zweiten Eigenmode mit einer vorgebbaren mechanischen Resonanzfrequenz f₂ auf, bei dem die beiden Schenkel 15A, 15B, wiederum im wesentlichen zueinander gleichphasig schwingen, hierbei jedoch im wesentlichen parallel zur Mittelebene E₁ der Doppelrohranordnung 21 ausgelenkt werden.

Erfindungsgemäß sind die für die beiden Eigenmoden jeweils wirksamen Federsteifigkeiten und Massen der Halterung 15 so bemessen, daß die Resonanzfrequenz f₁ des ersten Eigenmodes, wie auch in der Fig. 5 gezeigt, von der Resonanzfrequenz f₂ des zweiten Eigenmodes verschieden ist. Nach einer Ausgestaltung der Erfindung ist die Resonanzfrequenz f₁ des ersten Eigenmodes kleiner als die Resonanzfrequenz f₂ des zweiten Eigenmodes gewählt. Vorzugsweise ist die Resonanzfrequenz f₁, so gewählt, daß 90% oder weniger Resonanzfrequenz f₂ beträgt.

Beim in Fig. 2a oder 3 gezeigten Ausführungsbeispielen sind vornehmlich die in der jeweiligen Schwingungsrichtung im einzelnen wirksamen Federsteifigkeiten der beiden Schenkel 15A, 15B zu berücksichtigen während das Verbindungselement 15C mit den ggf. angebrachten Spulen einen wesentlichen Beitrag zur wirksamen Masse liefern. Die für die beiden Eigenmoden der Halterung 15 jeweils wirksamen Federsteifigkeiten und damit auch die jeweiligen mechanischen Resonanzfrequenzen f₁, f₂ der Halterung 15 können z.B. dadurch auf einfache Weise voneinander verschieden eingestellt werden, daß, wie auch in der Fig. 3 dargestellt, jeder der beiden Schenkel 15A, 15B eine Breite aufweist, die wesentlich größer als eine Dicke desselben Schenkels ist.

Nach einer weiteren Ausgestaltung der Erfindung umfaßt die Halterung, wie in Fig. 4a gezeigt, weiters einen am ersten Aufnehmerrohr 211 fixierten federelastischen dritten Schenkel 15E und wenigstens einen am zweiten Aufnehmerrohr 212 fixierten federelastischen vierten Schenkel 15F, wobei die beiden, insb. der Erhöhung der Resonanzfrequenzen f₂ dienenden, Schenkel 15E, 15F ebenfalls mittels des Verbindungselements 15C miteinander sowie auch mit den anderen beiden Schenkeln 15A, 15B mechanisch gekoppelt sind.

Erfindungsgemäß ist die Halterung 15 so dimensioniert, daß die mechanische Resonanzfrequenz f1 ihres ersten Eigenmodes niedriger ist, als eine niedrigste mechanische Resonanzfrequenz der im Nutzmode schwingenden Aufnehmerrohre 211, 212 ist, die wiederum gleich einer momentanen Erregerfrequenz f_{exc} eines dem Schwingungserreger 22 zugeführten Erregerstroms sein kann, vgl. hierzu auch Fig. 5.

Nach einer Ausgestaltung der Erfindung ist zur Vermeidung von, insb. harmonsichen, Anregungen des ersten Eigenmodes dessen Resonanzfrequenz f₁ so gewählt, daß sie 90% oder weniger als eine niedrigste mechanische Resonanzfrequenz der im Nutzmode schwingenden Aufnehmerrohre 211, 212 beträgt, oder anders gesagt, daß sie um 10% oder mehr niedriger ist, als jene niedrigste mechanische Resonanzfrequenz der im Nutzmode schwingenden Aufnehmerrohre 211, 212. Ferner hat es sich hierbei gezeigt, dass zur Vermeidung auch von subharmonischen Anregungen des ersten Eigenmodes ist dessen Resonanzfrequenz f₁ in vorteilhafter Weise so zu gewählen oder einzustellen ist, dass sie möglichst oberhalb von 50% der niedrigsten mechanische Resonanzfrequenz der im Nutzmode schwingenden Aufnehmerrohre 211, 212 und/oder bzw. oberhalb von 50% der Erregerfrequenz f_{exc} liegt.

Nach einer weiteren Ausgestaltung der Erfindung ist die Resonanzfrequenz f₁ des ersten Eigenmodes größer als 50 Hz gewählt, wodurch auch im Bereich üblicher Netzwechselspannungen ein gewisser Frequenzabstand zu allfälligen, netzspannungsbedingten oder netzgeführten, Störeinflüssen geschaffen wird.

Eine weitere, insb. bei Verwendung von Aufnehmerrohren mit einem Kaliber K von ≥ 40 mm und/oder bei Verwendung des Meßaufnehmers in Hochtemperaturbereichen mit Fluidtemperaturen von über 250 °C besonders vorteilhafte, Ausgestaltung der Magnetkreisanordnung, insb. bei deren Verwendung als Erreger 22, ist in Fig. 4b gezeigt. Hohe Temperaturen innerhalb des Meßaufnehmers führen neben den oben diskutierten hohen thermischen und/oder thermo-mechanischen Belastungen der Aufnehmerrohre 211, 212 oder der im Messaufnehmer verlegten elektrischen Leitungen, beispielsweise der Leitungen 16, auch dazu, daß die an den Aufnehmerrohren 211, 212 praktisch direkt fixierten Anker 11, 12 in erheblichem Maße aufgeheizt werden können. Aufgrund dessen muß für solche Anwendungen mit extrem hohen Temperaturen an den Aufnehmerrohren 211, 212 auf die Verwendung hochpermeabler und daher sonst sehr gut geeigneter SmCo-Verbindungen ggf. verzichtet werden. Zur Vermeidung überproportional großer Einbaumaße der Magnetkreisanordnung infolge der gezwungenermaßen niedrigeren magnetischen Leitfähigkeit der für solche Hochtemperatur-Anwendungen verwendbaren magnetischen Materialien, wie z.B. temperaturfestere AlNiCo-Verbindungen, und/oder infolge von großen Kalibern K der Aufnehmerrohre, wird daher gemäß einer Weiterbildung der Erfindung vorgeschlagen, zusätzlich zu den beiden Anker-/Spulen-Paaren 11, 13 bzw. 12, 14 zwei weitere Anker-/Spulen-Paare 11, 13 bzw. 12, 14 einzusetzen, die jeweils im wesentlichen baugleich zu den beiden anderen Anker-/Spulen-Paaren 11' 13' bzw. 12', 14' ausgebildet sind (das Anker-/ Spulen-Paar 12, 14 wie auch das Anker-/Spulen-Paar 12', 14' sind in Fig. 4b verdeckt). Zur Wahrung der Symmetrie, insb. im Hinblick auf die erste und zweite Symmetrieebene E₁, E₂, ist jedes der beiden in Richtung der oben erwähnten Längsschwerelinie der Doppelrohranordnung jeweils benachbarten

Anker-Spulen-Paare 11, 13, 11', 13' bzw. 12, 14, 12', 14' jeweils im gleichen Abstand zur zweiten Trägheitshauptachse angeordnet. Außerdem hat es sich hierbei als vorteilhaft erwiesen, die beiden in Richtung der Längsschwerelinie jeweils benachbarten Anker-Spulen-Paare 11, 13, 11', 13' bzw. 12, 14, 12', 14' möglichst nah zur Mitte und dementsprechend möglichst nah zueinander anzuordnen um eine ungewollte Anregung unerwünschter Schwingungsmoden möglichst zu vermeiden.

Für die Fixierung der beiden zusätzlichen Anker-/Spulen-Paare 11, 13 bzw. 12, 14 gemäß der oben beschriebenen Weise, ist das Verbindungselement 15C im wesentlichen plattenförmig ausgebildet, und zwar so, dass es ausreichend Platz zur Anordnung und Befestigung der hier verwendeten vier Anker-/Spulen-Paare bietet. Alternativ kann ein weiteres, im wesentlich zum hierbei im wesentlichen stabförmig ausgebildeten Verbindungselement 15C identisches Verbindungselement 15G in der Halterung 15 vorgesehen sein. Dieses Verbindungselement 15G ist, wie aus Fig. 4b ersichtlich, sowohl von den Aufnehmerrohren 211, 212 als auch vom Verbindungselement 15C beabstandet und zu diesem im wesentlichen parallel verlaufend an den beiden Schenkeln 15E, 15F entsprechend fixiert. Überdies kann die Halterung 15 zur Verbesserung ihrer Stabilität zusätzlich zu den Schenkeln 15A, 15B, 15E, 15F ein, wie in Fig. 4b gezeigt, mittig am Aufnehmerohr 211 fixierten fünften Schenkel 15G, der an seinem vom Aufnehmerrohr 211 entfernten Ende jeweils mit den beiden Schenkeln 15A, 15E verbunden ist, sowie einen gleichermaßen mittig am Aufnehmerrohr 212 fixierten sechsten Schenkel 15H aufweisen, der in entsprechender Weise an seinem vom Aufnehmerrohr 212 entfernten Ende jeweils mit den beiden Schenkeln 15B, 15F verbunden ist.

Zur weiteren Verbesserung der Temperaturbeständigkeit der Spulen einhergehend mit einer Erhöhung von deren mechanischen Festigkeit weist der Spulenkörper 13A der wenigstens einen Spule 13 gemäß einer weiteren Variante der Erfindung ein Außengewinde 13C auf, in das der Spulendraht 13B, insb. einlagig, eingelegt ist. Es hat sich hierbei außerdem als vorteilhaft erwiesen, wenn eine Steigung des Außengewindes 13C größer gewählt ist als der Drahtdurchmesser D des Spulendrahts 13B.

Darüber hinaus weist die Spule 13 gemäß einer vorteilhaften Ausgestaltung dieser Variante der Erfindung eine den auf den Spulenkörper 13A gewickelten Spulendraht 13B überziehende, aus elektrisch nicht leitendem Material bestehende Schutzschicht 13D auf. Dementsprechend kann als Spulendraht 13B auch ein isolationsfreier, blanker Draht verwendet werden. Gemäß einer vorteilhaften Weiterbildung der Erfindung ist die Schutzschicht 13D aus einem, insb. hochtemperaturfesten, keramischen und/oder glasartigen Material gebildet.

## Patentansprüche

1. Meßaufnehmer vom Vibrations-Typ, umfassend:
- ein erstes Aufnehmerrohr (211)
- ein zweites Aufnehmerrohr (212),
- sowie eine Halterung für elektrische Leitungen und/oder für eine am Meßaufnehmer vorgesehene Spulen, welche Halterung
- wenigstens einen an einem ersten Aufnehmerrohr (211) eines Meßaufnehmers fixierten federelastischen ersten Schenkel (15A) und
- wenigstens einen an einem zweiten Aufnehmerrohr (212) des Meßaufnehmers fixierten federelastischen zweiten Schenkel (15B) umfaßt;
- wobei die beiden Aufnehmerrohre (211, 212)
-- eine Doppelrohranordnung (21) mit einer Längsschwerelinie bilden, die in einer zwischen den beiden, insb. zueinander parallelen, Aufnehmerrohren (211, 212) imaginär verlaufende Mittelebene liegt,
-- und dafür ausgestaltet sind, im Betrieb des Meßaufnehmers zu mechanischen Schwingungen in einem Nutzmode so angeregt zu werden, daß sie zumindest zeitweise im wesentlichen zueinander gegenphasig schwingen;
- und wobei die beiden Schenkel (15A, 15B) der Halterung an einer von den beiden Aufnehmerrohren (211, 212) entfernten Verbindungsstelle, insb. im wesentlichen starr, miteinander verbunden sind, derart,
-- daß die Halterung einen ersten Eigenmode mit einer mechanischen Resonanzfrequenz aufweist, bei dem der am ersten Aufnehmerrohr (211) fixierte erste Schenkel (15A) und der am zweiten Aufnehmerrohr (212) fixierte zweite Schenkel (15B) im wesentlichen senkrecht zur Mittelebene der Dopplerohranordnung (21) pendeln,
-- und daß die Halterung einen zweiten Eigenmode von vorgebbarer mechanischer Resonanzfrequenz aufweist, bei dem der am ersten Aufnehmerrohr (211) fixierte erste Schenkel (15A) und der am zweiten Aufnehmerrohr (212) fixierte zweite Schenkel (15B) im wesentlichen parallel zur Mittelebene der Dopplelrohranordnung (21) pendeln;
**dadurch gekennzeichnet,**
- **daß** die Resonanzfrequenz, f₁, des ersten Eigenmodes der Halterung von der Resonanzfrequenz, f₂, des zweiten Eigenmodes der Halterung verschieden ist
- und **daß** die Resonanzfrequenz des ersten Eigenmodes der Halterung, insb. um 10% oder mehr, niedriger ist, als eine niedrigste mechanische Resonanzfrequenz der im Nutzmode schwingenden Aufnehmerrohre (211, 212).

2. Meßaufnehmer nach dem vorherigen Anspruch,
- wobei die Resonanzfrequenz, f₁, des ersten Eigenmodes der Halterung niedriger als die Resonanzfrequenz, f₂, des zweiten Eigenmodes der Halterung eingestellt ist; und/oder
- wobei die Resonanzfrequenz, f₁, des ersten Eigenmodes der Halterung größer als 50 Hz ist; und/oder
- wobei die Resonanzfrequenz, f₁, des ersten Eigenmodes der Halterung oberhalb von 50% der niedrigsten mechanischen Resonanzfrequenz der im Nutzmode schwingenden Aufnehmerrohre (211, 212) eingestellt ist.

3. Meßaufnehmer nach einem der vorherigen Ansprüche, wobei zumindest die Schenkel der Halterung aus einem Material bestehen, das einen linearen Wärmeausdehnungskoeffizienten von kleiner als 17·10⁻⁶/K aufweist.

4. Meßaufnehmer nach einem der vorherigen Ansprüche, wobei die Halterung zudem einen am ersten Aufnehmerrohr (211) fixierten federelastischen dritten Schenkel (15E) und wenigstens einen am zweiten Aufnehmerrohr (212) fixierten federelastischen vierten Schenkel (15F) umfaßt.

5. Meßaufnehmer nach einem der vorherigen Ansprüche, zudem umfassend: wenigstens eine Spule (13), die mittels der Halterung (15) an der Doppelrohranordnung (21) gehaltert ist.

## Claims

1. Vibronic-type sensor, comprising:
- a first sensor tube (211)
- a second sensor tube (212),
- as well as a holder for electric cables and/or for coils provided on the sensor, said holder comprising
- at least a spring-elastic first branch (15A) fixed on a first tube (211) of a sensor, and
- at least a spring-elastic second branch (15B) fixed on a second tube (212) of the sensor;
- wherein the two sensor tubes (211, 212)
-- form a double tube arrangement (21) with a longitudinal gravity line, which is located on a median plane extending in an imaginary manner between the two sensor tubes (211, 212), particularly being parallel to one another,
-- and are designed to be excited, during the operation of the sensor, to produce mechanical vibrations in a useful mode in such a way that they at least temporarily vibrate essentially in antiphase to one another;
- and wherein the two branches (15A, 15B) of the holder are interconnected, particularly in an essentially rigid manner, at a connection point at a distance from the two sensor tubes (211, 212), in such a way
-- that the holder has a first normal mode with a mechanical resonance frequency at which the first branch (15A) fixed on the first sensor tube (211) and the second branch (15B) fixed on the second sensor tube (212) oscillate in a manner that is essentially perpendicular to the median plane of the double tube arrangement (21),
-- and in that the holder has a second normal mode of a predefined mechanical resonance frequency at which the first branch (15A) fixed on the first sensor tube (211) and the second branch (15B) fixed on the second sensor tube (212) oscillate in a manner that is essentially parallel to the median plane of the double tube arrangement (21);
**characterized in that**
- the resonance frequency, f₁, of the first normal mode of the holder is different from the resonance frequency, f₂, of the second normal mode of the holder,
- and **in that** the resonance frequency of the first normal mode of the holder is less than a lowest mechanical resonance frequency of the sensor tubes (211, 212) vibrating in the useful mode, particularly by 10% or more.

2. Sensor as claimed in the previous claim,
- wherein the resonance frequency, f₁, of the first normal mode of the holder is set to a value that is lower than the resonance frequency, f₂, of the second normal mode of the holder; and/or
- wherein the resonance frequency, f₁, of the first normal mode of the holder is greater than 50 Hz; and/or
- wherein the resonance frequency, f₁, of the first normal mode of the holder is set to a value that is greater than 50 % of the lowest mechanical resonance frequency of the sensor tubes (211, 212) vibrating in the useful mode.

3. Sensor as claimed in one of the previous claims, wherein at least the branches of the holder are made from a material that has a linear thermal expansion coefficient less than 17•10⁻⁶/K

4. Sensor as claimed in one of the previous claims, wherein the holder also comprises a spring-elastic third branch (15E) fixed on the first sensor tube (211) and at least a spring-elastic fourth branch (15F) fixed on the second sensor tube (212).

5. Sensor as claimed in one of the previous claims, also comprising at least one coil (13), which is held on the double tube arrangement (21) using the holder (15).

## Revendications

1. Capteur du type à vibrations, comprenant :
- un premier tube de capteur (211)
- un deuxième tube de capteur (212),
- ainsi qu'un support pour des câbles électriques et/ou pour des bobines prévues sur le capteur, lequel support comprend
- au moins une première branche (15A) fixée de manière élastique sur un premier tube (211) d'un capteur, et
- au moins une deuxième branche (15B) fixée de manière élastique sur un deuxième tube (212) d'un capteur ;
- les deux tubes de capteur (211, 212)
-- formant un arrangement à double tube (21) avec une ligne de gravité longitudinale, qui se situe dans un plan médian s'étendant de manière imaginaire entre les deux tubes de capteur (211, 212), notamment parallèles l'un par rapport à l'autre,
-- et étant conçus de telle sorte à être excités, pendant le fonctionnement du capteur, en vibrations mécaniques dans un mode utile, de telle sorte à ce qu'ils vibrent au moins temporairement pour l'essentiel en opposition de phase l'un par rapport à l'autre ;
- et les deux branches (15A, 15B) du support étant reliées entre elles, pour l'essentiel de façon rigide, au niveau d'un point de liaison distant des deux tubes de capteur (211, 212), de telle sorte
-- que le support présente un premier mode propre avec une fréquence de résonance mécanique, dans lequel la première branche (15A) fixée sur le premier tube de capteur (211) et la deuxième branche (15B) fixée sur le deuxième tube de capteur (212) oscillent pour l'essentiel perpendiculairement au plan médian de l'arrangement à double tube (21),
-- et que le support présente un deuxième mode propre avec une fréquence de résonance mécanique prédéfinissable, dans lequel la première branche (15A) fixée sur le premier tube de capteur (211) et la deuxième branche (15B) fixée sur le deuxième tube de capteur (212) oscillent pour l'essentiel parallèlement au plan médian de l'arrangement à double tube (21) ;
**caractérisé**
- **en ce que** la fréquence de résonance, f₁, du premier mode propre du support est différente de la fréquence de résonance, f2, du deuxième mode propre du support,
- et **en ce que** la fréquence de résonance du premier mode propre du support est inférieure, notamment de 10 % ou plus, à une fréquence de résonance mécanique la plus basse des tubes de capteur (211, 212) vibrant dans le mode utile.

2. Capteur selon la revendication précédente,
- pour lequel la fréquence de résonance, f₁, du premier mode propre du support est réglée à une valeur inférieure à la fréquence de résonance, f₂, du deuxième mode propre du support ; et/ou
- pour lequel la fréquence de résonance, f₁, du premier mode propre du support est supérieure à 50 Hz ; et/ou
- pour lequel la fréquence de résonance, f₁, du premier mode propre du support est réglée à une valeur supérieure à 50 % de la fréquence de résonance mécanique la plus basse des tubes de capteur (211, 212) vibrant dans le mode utile.

3. Capteur selon l'une des revendications précédentes, pour lequel au moins les branches du support sont constituées d'un matériau présentant un coefficient de dilatation thermique linéaire inférieur à 17•10⁻⁶/K

4. Capteur selon l'une des revendications précédentes, pour lequel le support présente en outre une troisième branche (15E) fixée de manière élastique sur le premier tube de capteur (211) et au moins une quatrième branche (15F) fixée de manière élastique sur le deuxième tube de capteur (212).

5. Capteur selon l'une des revendications précédentes, comprenant en outre au moins une bobine (13), laquelle est fixée sur l'arrangement à double tube (21) au moyen du support (15).
